# EUROPEAN PATENT SPECIFICATION

(11) **EP 2 643 626 B1**
(45) Date of publication and mention of the grant of the patent: **09.03.2016**
(21) Application number: 11797137.4
(22) Date of filing: 21.11.2011
(51) Int. Cl.: F16L 59/153, B29L 23/00, B29C 65/10, B29C 65/62, B29C 65/00, F16L 59/02, B29C 63/06, F16L 59/16, B29D 23/00, B29C 65/52, B29L 9/00, B29C 65/48

(54) **TUBULAR INSULATING CLADDING FOR PIPES AND METHOD FOR PROVIDING THE TUBULAR INSULATING CLADDING**
ROHRFÖRMIGE ISOLIERVERKLEIDUNG FÜR ROHRE UND VERFAHREN ZUR BEREITSTELLUNG DER ROHRFÖRMIGEN ISOLIERVERKLEIDUNG
REVÊTEMENT ISOLANT TUBULAIRE POUR TUYAUX ET PROCÉDÉ PERMETTANT D'UTILISER LE REVÊTEMENT ISOLANT TUBULAIRE

(30) Priority: 23.11.2010 IT PD20100351
(43) Date of publication of application: 02.10.2013
(73) Proprietor: Aspen Aerogels Inc., Northborough, MA 01532 (US)
(72) Inventor: TOGNON, Francesco, 35129 Padova (IT)
(74) Representative: Adam, Holger
(86) International application number: PCT/IB2011/055216
(87) International publication number: WO 2012/069982

(56) References cited:
- WO-A1-2007/026168
- WO-A1-2009/119296
- WO-A2-2006/074463

## Description

### Technical Field

The present invention relates to a tubular insulating cladding for pipes.

### Background Art

The invention also relates to a method for providing such tubular cladding.

Nowadays, for the cladding for thermal insulation of pipes in which fluids flow that are particularly hot or cold, special tubular claddings are generally adopted, comprising one or more insulating layers, and the pipes to be thermally insulated have to be inserted into such claddings.

Such tubular claddings, although widespread, have a number of drawbacks.

The first of these drawbacks lies in the fact that conventional tubular claddings are not particularly deformable in a diametric direction.

This means that for each different outer diameter of a pipe to be insulated there must be a different tubular cladding with a corresponding inner diameter.

Moreover, such tubular claddings, precisely because of their lack of deformability in a radial direction, although they can be curved in order to be adaptable to any curved trajectories of a duct to be clad, cannot be folded by 180° without crushing and breakage in the region of folding, and must be stored fully extended, in sections of up to ten meters.

What is more, as mentioned above, the non-deformability in a radial direction does not allow any compression of such tubular claddings, which thus, in addition to having a non-variable diameter, cannot be compressed so as to be able to be conveniently wrapped around an adapted support, also because of the radial thickness of the insulating layer, which is often of considerable size with respect to the diameter of the pipe to be clad.

This leads to a considerable volume of parts in storage, which is unavoidable since as many series of tubular claddings have to be stored as there are outer diameters of pipes to be clad.

WO 2006/074463 discloses a method for thermally insulating a flow line comprising: providing a flow line; providing an outer carrier pipe that is concentrically aligned with the flow pipe so as to create an annular space between the flow line and carrier pipe, wherein the spacer is in that annular space; providing an insulation system that comprises an aerogel material, the insulation system substantially filling void volumes outside the spacer in the annular space between the flow line and carrier pipe; and flowing a fluid through the flow line. This document further discloses a pipe-in-pipe apparatus for thermally insulating a flow line comprising: a flow line; a carrier pipe that is concentrically aligned with the flow line so as to create an annular space between the flow line and carrier pipe; and an aerogel material within the annular space between the flow line and the carrier pipe. WO 2006/074463 discloses the preamble of claim 1.

### Disclosure of the Invention

The aim of the present invention is to provide a tubular insulating cladding for pipes that is capable of overcoming the above-mentioned drawbacks of conventional claddings.

A particular object of the invention is to provide a cladding that adapts to different pipe diameters, thus limiting the problems of storage, of transport volumes and of encumbrance in general.

Another object of the invention is to provide a method for providing tubular insulating cladding for pipes as in the above-mentioned aim and the associated objects.

Another object of the invention is to provide a tubular insulating cladding for pipes, as well as a method for providing such a tubular insulating cladding for pipes, that can be made using known plants and technologies.

This aim and these and other objects which will become more apparent hereinafter, are achieved by a tubular insulating cladding (10) for pipes, wherein it comprises, from the inside outward,
- a tubular element (11) that is elastically deformable in a radial direction and is either adapted to accommodate a pipe (12) or a portion of a pipe to be clad, conforming thereto dimensionally and geometrically, or is adapted to be compressed in a radial direction for storage,
- an insulating layer (13), which can be conformed and is based on aerogel,
- an external containment sheath (14), which is arranged so as to envelop the insulating layer (13),
characterized in that the insulating layer (13) is arranged so as to surround, with play in the inactive configuration, said elastically deformable tubular element (11).

### Brief description of the drawings

Further characteristics and advantages of the invention will become more apparent from the description of a preferred, but not exclusive, embodiment of the cladding according to the invention, which is illustrated by way of non-limiting example in the accompanying drawings wherein:
Figure 1 is a transverse cross-section view of a cladding according to the invention, applied to a generic pipe;
Figure 2 is a view of a first step of a method for providing a cladding according to the invention;
Figure 3 is a transverse cross-section view of a detail of the first step in Figure 2;
Figure 4 is a view of a second step of the method for providing a cladding according to the invention;
Figure 5 shows a cladding according to the invention in the configuration for transport.

### Ways of carrying out the invention

With reference to the figures, a tubular insulating cladding for pipes according to the invention is generally designated with the reference numeral 10.

Such cladding 10 comprises, from the inside outward,
- a tubular element (11) that is elastically deformable in a radial direction and is either adapted to accommodate a pipe (12) or a portion of a pipe to be clad, conforming thereto dimensionally and geometrically, or is adapted to be compressed in a radial direction for storage,
- an insulating layer (13), which can be conformed and is based on aerogel,
- an external containment sheath (14), which is arranged so as to envelop said insulating layer (13),
characterized in that the insulating layer (13) is arranged so as to surround, with play in the inactive configuration, said elastically deformable tubular element (11).

The elastically deformable tubular element 11 is, in the non-limiting embodiment of the invention described herein, of the braided type, with weft and warp worked so as to allow the adaptability of the braided tubular element to a series of different pipe diameters, within a predefined size range of such diameters.

For example an elastically deformable braided tubular element 11, which at rest has a diameter of X centimeters, can be adapted to be fitted over pipes having diameters between X and X+2 centimeters.

Such an elastically deformable braided tubular element 11 is made, for use on pipes for hot fluids, of glass fiber fabric.

It should be noted that such an elastically deformable tubular element 11 can also be provided with other fabrics or non-woven fabrics or multilayer tubular elements that are similar and equivalent, according to the needs and requirements of thermal insulation.

The external sheath 14 is, for example, made of PVC or other similar and equivalent plastic material.

If such an external sheath 14 is deployed in a particularly hot environment, it is provided with a fabric that is resistant to high temperatures, which should be understood as being of a known type.

The insulating layer 13 is based on aerogel and provided for example with Pyrogel® of the Aspen company. Note that other materials or multilayered materials comprising aerogel, which should be understood as being of a known type, can also be used, according to necessity and requirements.

Such insulating layer 13 can be conformed in the sense that it is deformable so as to be adapted to the diameter of the pipe on which the cladding 10 is applied, as well as to curved sections of the piping, the insulating layer 13 being retained between the internal tubular element 11 and the external containment sheath 14.

The elastically deformable tubular element 11 is joined to the insulating layer 13 that surrounds it along a seam 15 in a longitudinal direction.

In this manner the deformable braided tubular element 11 cannot slide in a longitudinal direction with respect to the insulating layer 13, nor can there be a rotation relative thereto. This makes the cladding more manageable and prevents the unwanted removal of the deformable tubular element from the insulating layer, as well as the twisting of the deformable tubular element within the insulating layer.

The invention also relates to a method for providing a tubular insulating cladding 10 for pipes 12 as described above.

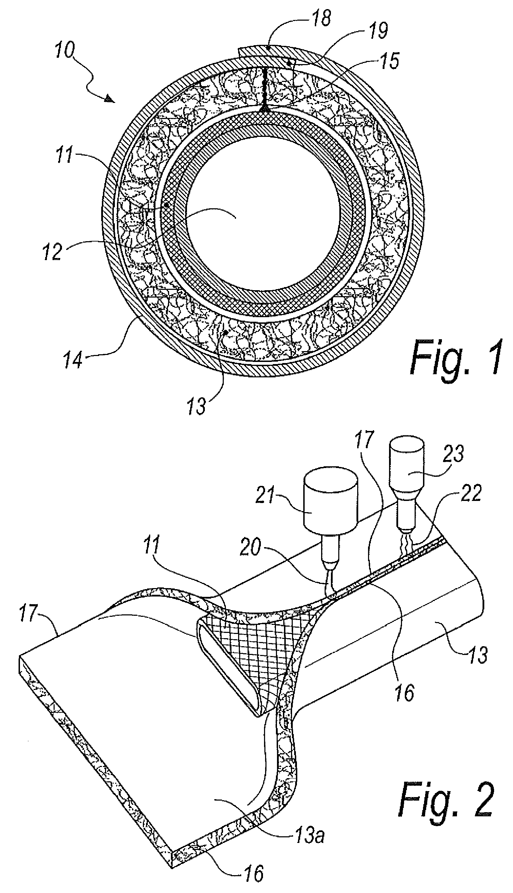

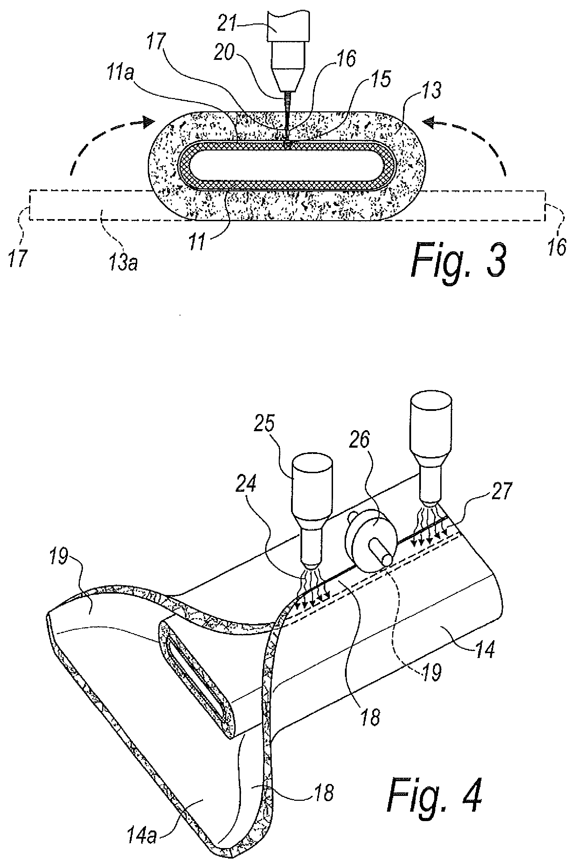

Such a method consists in:
- juxtaposing to a tubular element 11 that is elastically deformable in a radial direction an insulating layer 13 based on aerogel in the form of a strip 13 a, which extends in the same direction of extension as the elastically deformable tubular element, as in Figure 2;
- adhesive bonding of the opposite longitudinal edges 16 and 17 of the strip 13a of insulating layer so that the insulating layer surrounds the elastically deformable tubular element 11, as in Figures 2 and 3;
- juxtaposing to the insulating layer 13, thus closed around the elastically deformable tubular element 11, a containment sheath 14 in the form of a strip 14a of plastic material, which extends in the same direction of extension as the elastically deformable tubular element 11 and the insulating layer 13, as in Figure 4;
- superimposing and joining the opposite lateral flaps 18 and 19 of the containment sheath in strip form 14a, also as in Figure 4.

In particular, the adhesive bonding of the opposite longitudinal edges 16 and 17 of the strip of insulating layer 13a occurs by way of:
- depositing hot glue 20, by way of adapted pouring means 21 which should be understood as being of a known type, between the edges 16 and 17 arranged facing, with glue 20 that descends until it also affects the surface 11a of the elastically deformable tubular element 11, thus defining a seam 15 and thus joining the edges to each other and to the elastically deformable tubular element, as mentioned above;
- cooling the glue in the joining region of the edges 16 and 17, for example by blowing a jet of cooling air 22 by means of a special blowing device 23, which should be understood as being of known type.

The junction of the opposite lateral flaps 18 and 19 of the containment sheath in strip form of plastic material is for example achieved in the following manner:
- blowing hot air 24, with means for blowing hot air 25 which should be understood as being known, onto the juxtaposed flaps 18 and 19, at least until both the flaps soften;
- compressing, for example with a pressure roller 26, the softened flaps 18 and 19 onto each other;
- blowing cooling air 27 onto the flaps which are compressed onto each other.

If the sheath 14 is made of fabric that is resistant to high temperatures, then the mutual fixing of the juxtaposed flaps can be performed by stitching.

The use of the tubular insulating cladding 10 according to the invention is as follows.

The pipe 12 is placed in the elastically deformable tubular element 11, which distends, enveloping and adhering to the outer surface of the pipe.

The play between the deformable tubular element 11 and the insulating layer 13, together with the play, if any, between the insulating layer 13 and the containment sheath 14, allow the adaptability of a cladding 10 according to the invention to a plurality of different pipe diameters.

Moreover, the adoption of an insulating layer based on aerogel, a material with exceptionally high thermal insulation properties, ensures a very contained thickness for the overall cladding 10, thus allowing the compressibility thereof in a radial direction and therefore its ability to be wrapped around a reel or spool, with enormous advantages in terms of storage as well as saving of encumbrances during transport.

Moreover, the flexibility characteristics of the deformable tubular element 11, both of the insulating layer 13 and of the sheath 14, make it possible to clad curved sections of duct even without the need to cut the cladding 10.

In practice it has been found that the invention fully achieves the intended aim and objects.

In particular, with the invention a cladding has been devised that adapts to different pipe diameters, thus limiting the problems of storage, of transport volumes and of encumbrance in general.

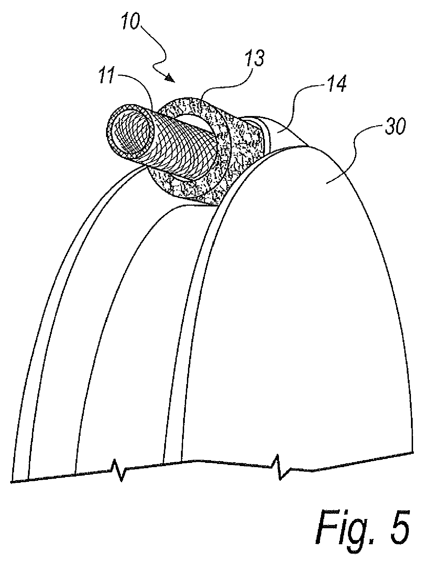

In fact, as can be seen in Figure 5, the overall flexibility of the tubular cladding 10 according to the invention allows the winding thereof around a reel or spool 30, a solution that considerably reduces the encumbrances thereof with respect to conventional rigid tubular claddings.

Moreover, with the invention a method is devised for providing a tubular insulating cladding for pipes as described above.

Last but not least, with the invention a tubular insulating cladding for pipes, as well as a method for providing such a tubular insulating cladding for pipes, have been devised that can be provided using known plants and technologies.

The invention, thus conceived, is susceptible of numerous modifications and variations, all of which are within the scope of the appended claims.

In practice the materials employed, and the contingent dimensions and shapes, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A tubular insulating cladding (10) for pipes, wherein it comprises, from the inside outward,
- a tubular element (11) that is elastically deformable in a radial direction and is either adapted to accommodate a pipe (12) or a portion of a pipe to be clad, conforming thereto dimensionally and geometrically, or is adapted to be compressed in a radial direction for storage,
- an insulating layer (13), which can be conformed and is based on aerogel.
- an external containment sheath (14), which is arranged so as to envelop said insulating layer (13), **characterized in that** the insulating layer (13) is arranged so as to surround, with play in an inactive configuration, said elastically deformable tubular element (11).

2. The cladding according to claim 1, **characterized in that** said elastically deformable tubular element (11) is of the braided type, with weft and warp worked so as to allow the adaptability of said braid to a series of different pipe diameters within a predefined size range of said diameters.

3. The cladding according to claim 2; **characterized in that** said deformable tubular element (11) of the braided type is made of glass fiber fabric, particularly for use on pipes for hot fluids.

4. The cladding according to one or more of the preceding claims, **characterized in that** said external sheath (14) is made of PVC or other similar and equivalent plastic material.

5. The cladding according to claims 1 to 3, **characterized in that** said external sheath (14) is made of a fabric that is resistant to high temperatures.

6. The cladding according to one or more of the preceding claims, **characterized in that** said insulating layer (13) is produced with an aerogel comprising silica aerogel.

7. The cladding according to one or more of the preceding claims, **characterized in that** said elastically deformable tubular element (11) is joined to said insulating layer (13) that surrounds it along a seam (15) in a longitudinal direction.

8. A method for providing a tubular insulating cladding (10) for pipes according to one or more of the preceding claims, which consists in:
- juxtaposing to a tubular element (11) that is elastically deformable in a radial direction an insulating layer (13) based on aerogel in the form of a strip (13a), which extends in the same direction of extension as said elastically deformable tubular element (11),
- adhesive bonding of the opposite longitudinal edges (16, 17) of said strip (13a) of insulating layer so that said insulating layer surrounds said elastically deformable tubular element;
- juxtaposing to said insulating layer (13), closed around said elastically deformable tubular element (11), a containment sheath (14) in the form of a strip (14a) of plastic material, which extends in the same direction of extension as said elastically deformable tubular element (11) and said insulating layer (13),
- superimposing and joining the opposite lateral flaps (18, 19) of said containment sheath in strip form (14a).

9. The method according to claim 8, **characterized in that** said adhesive bonding of the opposite longitudinal edges (16, 17) of said strip (13a) of insulating layer occurs by way of:
- depositing hot glue (20) between said facing edges (16, 17), with glue that descends until it rests also on the surface (11a) of said elastically deformable tubular element (11), thus joining said edges (16, 17) to each other and to said elastically deformable tubular element (11);
- cooling the joining region of said edges (16, 17).

10. The method according to claims 8 and 9, **characterized in that** said joining of the opposite lateral flaps (18, 19) of said containment sheath in strip form made of plastic material (14a) consists in:
- blowing hot air (24) onto said juxtaposed flaps (18, 19) at least until both of said flaps soften;
- compressing onto each other said softened flaps (18, 19);
- blowing cooling air (27) onto the flaps (18, 19) which are compressed onto each other.

## Patentansprüche

1. Rohrförmige Isolierverkleidung (10) für Rohre, wobei sie von der Innenseite nach außen umfasst
- ein rohrförmiges Element (11), welches elastisch in einer radialen Richtung verformbar ist und entweder ausgestaltet ist, um ein Rohr (12) oder einen Abschnitt eines Rohrs, welches zu isolieren ist, aufzunehmen, wobei es damit dimensional und geometrisch angepasst ist, oder ausgestaltet ist, um in einer radialen Richtung zur Aufbewahrung zusammengedrückt zu werden,
- eine Isolierschicht (13), welche angepasst werden kann und auf einem Aerogel basiert,
- eine äußere Umschließungshülle (14), welche angeordnet ist, um die Isolierschicht (13) zu umhüllen,
**dadurch gekennzeichnet,**
**dass** die Isolierschicht (13) angeordnet ist, um das elastische verformbare rohrförmige Element (11) mit Spiel in einer inaktiven Konfiguration zu umgeben.

2. Verkleidung nach Anspruch 1, **dadurch gekennzeichnet, dass** das elastisch verformbare rohrförmige Element (11) von dem geflochtenen Typ ist, wobei Schussfaden und Ketten gearbeitet sind, so dass die Adaption der Flechte an eine Reihe von verschiedenen Rohrdurchmessern innerhalb eines vordefinierten Größenbereichs der Durchmesser ermöglicht wird.

3. Verkleidung nach Anspruch 2, **dadurch gekennzeichnet, dass** das verformbare rohrförmige Element (11) des geflochtenen Typs aus Glasfaser-Stoff, insbesondere zur Verwendung auf Rohren für heiße Fluids, hergestellt ist.

4. Verkleidung nach einem der vorhergehenden Ansprüche, **dadurch gekennzeichnet, dass** die äußere Hülle (14) aus PVC oder einem anderen ähnlichen und äquivalenten Kunststoffmaterial hergestellt ist.

5. Verkleidung nach einem der Ansprüche 1 bis 3, **dadurch gekennzeichnet, dass** die äußere Hülle (14) aus einem Stoff hergestellt ist, welcher bei hohen Temperaturen stabil ist.

6. Verkleidung nach einem oder mehreren der vorhergehenden Ansprüche, **dadurch gekennzeichnet, dass** die Isolierschicht (13) mit einem Aerogel, welches Kieselaerogel umfasst, hergestellt ist.

7. Verkleidung nach einem oder mehreren der vorhergehenden Ansprüche, **dadurch gekennzeichnet, dass** das elastische verformbare rohrförmige Element (11) mit der Isolierschicht (13) verbunden ist, welche es entlang einer Naht (15) in einer Längsrichtung umgibt.

8. Verfahren zum Bereitstellen einer rohrförmigen Isolierverkleidung (10) für Rohre nach einem oder mehreren der vorhergehenden Ansprüche, welches besteht aus:
- Nebeneinanderstellen eines rohrförmigen Elements, welches in einer radialen Richtung elastisch verformbar ist, und einer Isolierschicht (13), welche auf einem Aerogel basiert, in der Form eines Streifens (13a), welcher sich in derselben Ausdehnungsvorrichtung wie das elastisch verformbare rohrförmige Element (11) erstreckt,
- klebend Verbinden der gegenüberliegenden Längsränder (16, 17) des Streifens (13a) der Isolierschicht, so dass die Isolierschicht das elastisch verformbare rohrförmige Element umgibt;
- Nebeneinanderstellen der Isolierschicht (13), welche um das elastisch verformbare rohrförmige Element (11) geschlossen ist, und einer Umschließungshülle (14) in der Form eines Streifens (14a) eines Kunststoffmaterials, welcher sich in derselben Ausdehnungsvorrichtung wie das elastisch verformbare rohrförmige Element (11) und die Isolierschicht (13) erstreckt,
- Übereinanderlegen und Verbinden der gegenüberliegenden seitlichen Enden (18, 19) der Umschließungshülle in Streifenform (14a).

9. Verfahren nach Anspruch 8, **dadurch gekennzeichnet, dass** das klebende Verbinden der gegenüberliegenden Längsränder (16, 17) des Streifens (13a) der Isolierschicht erfolgt mittels:
- Aufbringen eines heißen Klebers (20) zwischen den gegenüberliegenden Rändern (16, 17), wobei der Kleber abwärts gleitet bis er auch auf der Oberfläche (11a) des elastischen verformbaren rohrförmigen Elements (11) liegt, wodurch die Ränder (16, 17) miteinander und mit dem elastischen verformbaren rohrförmigen Element (11) verbunden werden;
- Kühlen des Verbindungsbereichs der Ränder (16, 17).

10. Verfahren nach den Ansprüche 8 und 9, **dadurch gekennzeichnet, dass** das Verbinden der gegenüberliegenden seitlichen Enden (18, 19) der Umschließungshülle in Streifenform, welche aus einem Kunststoffmaterial (14 a) hergestellt ist, besteht aus:
- Blasen von heißer Luft (24) auf die nebeneinander angeordneten Enden (18, 19) bis zumindest beide Enden weich sind;
- aufeinander Drücken der weichen Enden (18, 19);
- Blasen von Kühlluft (27) auf die Enden (18, 19), welche zusammengedrückt werden.

## Revendications

1. Revêtement isolant tubulaire (10) pour tuyaux, dans lequel il comprend, de l'intérieur vers l'extérieur :
- un élément tubulaire (11) qui est élastiquement déformable dans une direction radiale et est adapté pour loger un tuyau (12) ou une partie d'un tuyau à recouvrir, se conformant du point de vue dimensionnel et géométrique à ce dernier, ou est adapté pour être comprimé dans une direction radiale pour le stockage,
- une couche isolante (13) qui peut être conformée et est à base d'aérogel,
- une gaine de confinement externe (14) qui est agencée afin d'envelopper ladite couche isolante (13), **caractérisé en ce que** la couche isolante (13) est agencée afin d'entourer, avec du jeu dans une configuration inactive, ledit élément tubulaire (11) élastiquement déformable.

2. Revêtement selon la revendication 1, **caractérisé en ce que** ledit élément tubulaire (11) élastiquement déformable est du type à tresse, avec un travail de trame et de chaîne afin de permettre l'adaptabilité de ladite tresse à toute une série de différents diamètres de tuyau dans une plage de dimension prédéfinie desdits diamètres.

3. Revêtement selon la revendication 2, **caractérisé en ce que** ledit élément tubulaire déformable (11) du type à tresse, est réalisé avec un tissu de fibre de verre, en particulier destiné à être utilisé sur des tuyaux pour des fluides chauds.

4. Revêtement selon une ou plusieurs des revendications précédentes, **caractérisé en ce que** ladite gaine externe (14) est réalisée à partir de PVC ou d'une autre matière plastique similaire et équivalente.

5. Revêtement selon les revendications 1 à 3, **caractérisé en ce que** ladite gaine externe (14) est réalisée avec un tissu qui est résistant aux températures élevées.

6. Revêtement selon une ou plusieurs des revendications précédentes, **caractérisé en ce que** ladite couche isolante (13) est produite avec un aérogel comprenant un aérogel de silice.

7. Revêtement selon une ou plusieurs des revendications précédentes, **caractérisé en ce que** ledit élément tubulaire (11) élastiquement déformable est assemblé à ladite couche isolante (13) qui l'entoure le long d'une couture (15) dans une direction longitudinale.

8. Procédé pour fournir un revêtement isolant tubulaire (10) pour tuyaux selon une ou plusieurs des revendications précédentes, qui comprend les étapes consistant à :
- juxtaposer à un élément tubulaire (11) qui est élastiquement déformable dans une direction radiale, une couche isolante (13) à base d'aérogel se présentant sous la forme d'une bande (13a), qui s'étend dans la même direction d'extension que ledit élément tubulaire (11) élastiquement déformable,
- relier par adhésif les bords longitudinaux (16, 17) opposés de ladite bande (13a) de la couche isolante de sorte que ladite couche isolante entoure ledit élément tubulaire élastiquement déformable ;
- juxtaposer à ladite couche isolante (13), fermée autour dudit élément tubulaire (11) élastiquement déformable, une gaine de confinement (14) se présentant sous la forme d'une bande de matière plastique, qui s'étend dans la même direction d'extension que ledit élément tubulaire (11) élastiquement déformable et ladite couche isolante (13),
- superposer et assembler les rabats latéraux (18, 19) opposés de ladite gaine de confinement, en forme de bande (14a).

9. Procédé selon la revendication 8, **caractérisé en ce que** ladite étape consistant à relier par adhésif les bords longitudinaux (16, 17) opposés de ladite bande (13a) de couche isolante, a lieu avec les étapes consistant à :
- déposer de la colle chaude (20) entre lesdits bords en vis-à-vis (16, 17), avec la colle qui descend jusqu'à ce qu'elle s'appuie également sur la surface (11a) dudit élément tubulaire (11) élastiquement déformable, assemblant ainsi lesdits bords (16, 17) entre eux et ledit élément tubulaire (11) élastiquement déformable ;
- refroidir la région d'assemblage desdits bords (16, 17) .

10. Procédé selon les revendications 8 et 9, **caractérisé en ce que** ledit assemblage des rabats latéraux (18, 19) opposés de ladite gaine de confinement sous forme de bande réalisée à partir de matière plastique (14a) comprend les étapes consistant à :
- souffler de l'air chaud (24) sur lesdits rabats (18, 19) juxtaposés au moins jusqu'à ce que les deux desdits rabats se ramollissent ;
- comprimer lesdits rabats (18, 19) ramollis l'un sur l'autre ;
- souffler de l'air froid (27) sur les rabats (18, 19) qui sont comprimés l'un sur l'autre.
